# EUROPÄISCHE PATENTSCHRIFT

(11) **EP 0 716 976 B1**
(45) Veröffentlichungstag und Bekanntmachung des Hinweises auf die Patenterteilung: **18.08.1999**
(21) Anmeldenummer: 95114497.1
(22) Anmeldetag: 15.09.1995
(51) Int. Cl.: B62M 9/10

(54) **Kettenschaltung**
Chain-shifting gear change
Changement de vitesse à chaîne

(30) Priorität: 16.12.1994 DE 4445035
(43) Veröffentlichungstag der Anmeldung: 19.06.1996
(73) Patentinhaber: SRAM Deutschland GmbH, 97424 Schweinfurt (DE)
(72) Erfinder: Schmidt, Frank, Dipl.-Ing., D-97422 Schweinfurt (DE); Bodmer, Jörg, Dipl.-Ing. (FH), D-97422 Schweinfurt (DE); Neuer, Andreas, Dr., D-97422 Schweinfurt (DE)

(56) Entgegenhaltungen:
- EP-A- 0 474 139
- EP-A- 0 538 780
- WO-A-94/14644
- DE-A- 3 037 857

## Beschreibung

Die Erfindung bezieht sich auf eine Kettenschaltung, insbesondere für Fahrräder gemäß dem Oberbegriff des Anspruchs 1.

Mit der EP 474 139 A1 ist eine Kettenschaltung mit einem vorderen Kettenradsatz bekannt, dessen großes Kettenrad an seiner dem kleineren Kettenrad zugewandten Seite eine Schalthilfe aufweist, in die eine Außenlasche der Kette eingreift, die in einer Entfernung von dem ablaufenden Zahn auf dem benachbarten kleinen Kettenrad von einem ganzteiligen Vielfachen der Kettenteilung entfernt liegt. Diese Schalthilfe besteht entweder aus einem radial nach innen verlegten Zahn, der in Richtung zum benachbarten kleinen Kettenrad ausgestellt ist, oder in einer Platte, die als Zahnradsegment ausgebildet ist und die Kette zu einem ersten in seiner Form modifizierten Zahn überleitet. Schalthilfen, die sehr weit aus der Kettenlaufebene herausragen, sind hinsichtlich Schräglauf beim Schalten am hinteren Kettenwerfer beim Vorwärts- und/oder Rückwärtstreten besonders bei großen Durchmesserunterschieden der Kettenräder gefährlich wegen ihrer Neigung zum selbstständigen unbeabsichtigten, Auflaufen auf das jeweils größere Kettenrad, was zu Fehlschaltungen oder aber zum Kettenabwurf führen kann.

Aus der früheren Schrift DE 30 37 857 C2 ist ein Kettenradsatz, bestehend aus zwei Kettenrädern bekannt, wo versucht wird, mit wenigstens zwei am Umfang weggelassenen Zähnen und mit einem dort anstelle des jeweils weggelassenen Zahnes angeordneten Vorsprung die Kette zum Wechsel auf das größere der beiden Kettenräder zu veranlassen. Die hier vorgeschlagene Lösung ergibt nur dann eine befriedigende Schaltqualität, wenn mehrere bestimmte Bedingungen eingehalten werden. Es ist nicht ausgeschlossen, daß bei willkürlicher Paarung zweier Kettenräder eine befriedigende Schaltqualität erreicht wird; beim Zusammentreffen einer Innenlasche mit dem Vorsprung ist jedoch eine einwandfreie Schaltqualität nicht gewährleistet; außerdem genügt eine Zahnlücke noch nicht als wirksame Passage für die Kette beim Schalten von dem kleineren auf das größere Kettenrad.

Der Erfindung liegt die Aufgabe zugrunde, eine weitere Erleichterung des Übergangs, insbesondere von dem größeren Kettenrad auf das kleinere Kettenrad, gegebenenfalls aber auch vom kleineren Kettenrad auf das größere Kettenrad zu ermöglichen. Insbesondere soll erreicht werden, daß dann, wenn von einem zum anderen Kettenrad unter Last ein Übergang bewerkstelligt werden soll, dieser Übergang geräuscharm, sicher und stoßfrei erfolgt und die Kette möglichst rasch in Eingriff mit dem neugewählten Kettenrad tritt.

Die Lösung dieser Aufgabe ist in den Ansprüchen beschrieben.

Ein bevorzugtes Ausführungsbeispiel wird in den Zeichnungen dargestellt. Es zeigen:
- Fig. 1: die Anordnung einer Kettenschaltung mit einer vorderen und einer hinteren Umlegeeinrichtung sowie einem treibenden und einem angetriebenen Kettenradsatz in einem Fahrradrahmen als Teilansicht;
- Fig. 2: den vorderen Kettenradsatz mit einem großen, einem mittleren und einem kleinen Kettenrad und je einer Kette, die vom jeweils kleineren auf das jeweils größere Kettenrad umgegelegt wird;
- Fig. 3: Den Kettenradsatz gemäß Fig. 2 mit jeweils einer Kette, die jeweils zum kleineren Kettenrad umgelegt wird;
- Fig. 4: eine perspektivische Darstellung für das Umlegen der Kette auf den größeren Zahnkranz über einen Konusniet;
- Fig. 5: den Verlauf der Kette beim Schalten vom größeren auf den kleineren Zahnkranz in perspektivischer Darstellung;
- Fig. 6: die Kette beim Umlegen vom kleinen auf das mittlere Kettenrad, perspektivisch dargestellt;
- Fig. 7: die Kette in Ablaufposition vom mittleren auf das kleine Kettenrad, perspektivisch dargestellt;
- Fig. 8: das große Kettenrad in Teilansicht;
- Fig. 9: das große Kettenrad auf den Umfang gesehen;
- Fig. 10: das große Kettenrad als Teilansicht von der anderen Seite;
- Fig. 11: das mittlere Kettenrad als Teilansicht;
- Fig. 12: das mittlere Kettenrad als radiale Ansicht;
- Fig. 13: das mittlere Kettenrad als Seitenansicht von der entgegengesetzten Seite.

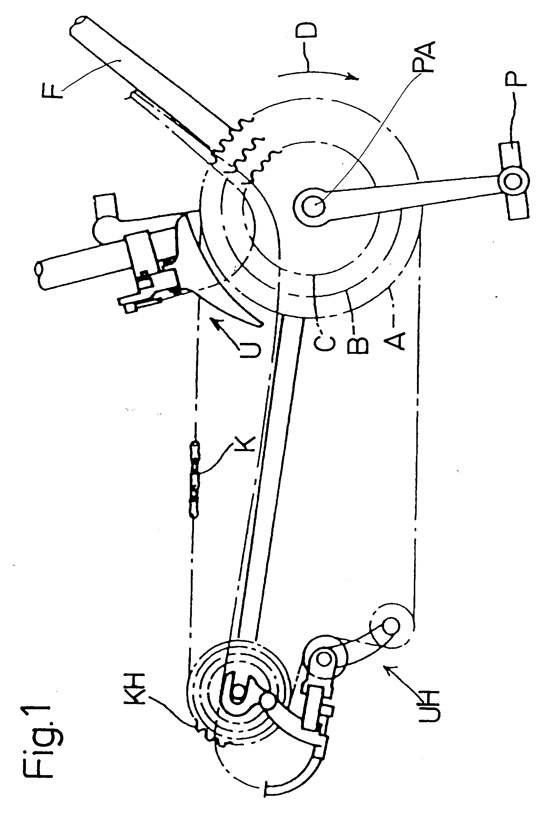

Die Fig. 1 zeigt einen Abschnitt aus einem Fahrradrahmen F mit einem Kettenradsatz KS, der auf einer Pedalachse PA mit Pedalen P drehbar angeordnet ist, einem Kettenradsatz HK, einer Kette K, einer vorderen U und einem hinteren Umlegeeinrichtung UH. Bei Drehung des Kettenradsatzes K in Uhrzeigersinn fährt das Fahrrad vorwärts und die Kette K läuft dann in einer Umlaufrichtung D gemeinsam mit dem vorderen Kettenradsatz KS und dem hinteren Kettenradsatz K,H gemeinsam um. Der Kettenradsatz KS umfaßt in dem gezeigten Ausführungsbeispiel ein großes Kettenrad A, ein mittleres Kettenrad B und ein kleines Kettenrad C, auf welchem wechselweise die Kette K zur Erzeugung verschiedener Übersetzungsverhältnisse läuft.

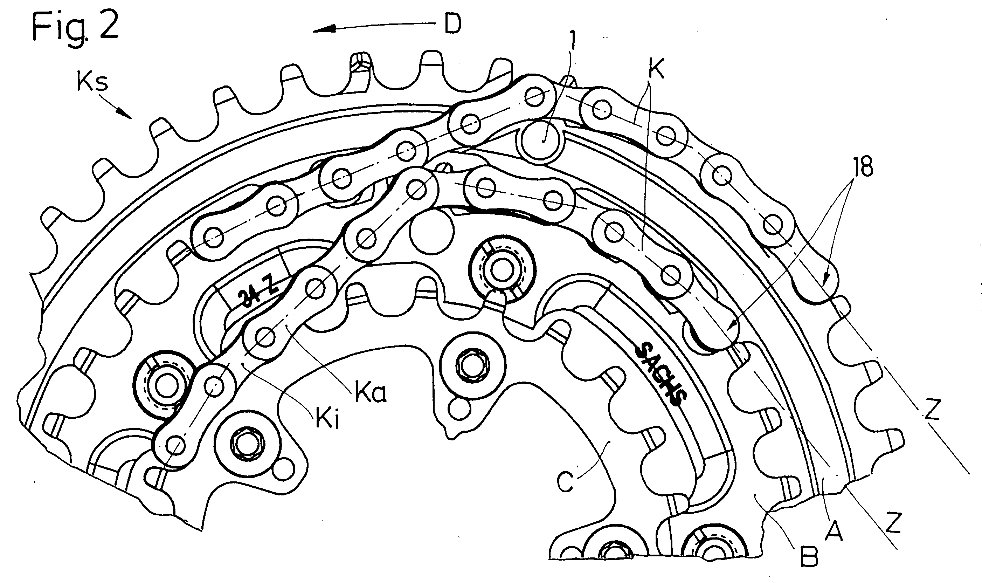

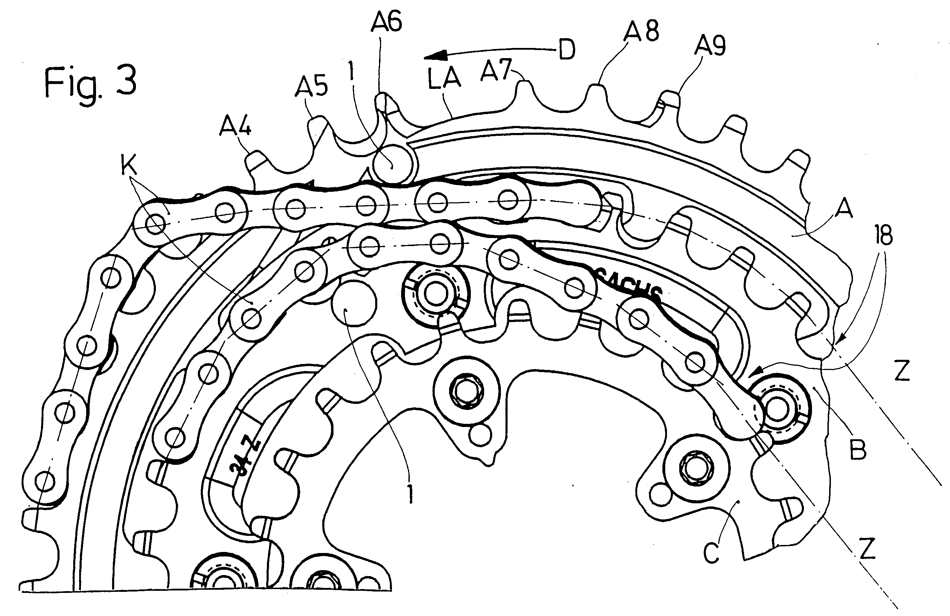

In Fig. 2 ist ein Segment des Kettenradsatzes KS dargestellt, auf dem die Kette K der Einfachheit halber zweimal dargestellt ist, einmal in der Schaltposition kurz nach dem Auflaufen (Hochschalten) vom mittleren Kettenrad B auf das große Kettenrad A und ein anderes Mal kurz nach dem Hochschalten vom kleinen Kettenrad C auf das mittlere Kettenrad B. Hier wird deutlich, daß die Kette K, die im wesentlichen aus Gelenken B mit Bolzen 3, Innnelaschen Ki und Außenlaschen Ka besteht, beim Übergang auf das jeweils größere Kettenrad auf einem Konusniet 1 aufliegt, bevor sie in die Zähne des größeren Kettenrades A einläuft. Dieser Konusniet weist eine umlaufende Kante 2 auf, die scharf ist und den größten Durchmesser des Konusniets 1 darstellt. Zur Planfläche des jeweiligen Kettenrades A oder B hin verjüngt sich der Konusniet 1 und bildet die scharfe umlaufende Kante 2 mit einem Winkel von kleiner als 90° aus, was der Kette K die Möglichkeit gibt, sich mit der Spalte, die sich zwischen der Innenlasche Ki und der Außenlasche Ka im Bereich des Bolzens 3 ergibt, auf der Kante 2 abzustützen ohne Rücksicht darauf, ob die Kette K mit einer Außenlasche Ka am Konusniet 1 ankommt, wie in Fig. 3 dargestellt, oder mit einer Innenlasche Ki, die eine punktförmige Auflage der Kette K auf dem Konusniet 1 direkt unterhalb des Bolzens 3 immer unabhängig von der Laschenfolge gewährleistet. Die Stellung der Kettenräder A und B zueinander ist in etwa derart, daß jeweils der Bereich der Kette K um den Bolzen 3 herum mit der Kante 2 des Konusniets 1 zusammentrifft, wobei die Mittenverbindung vom Konusniet 1 und vom Bolzen 3 etwas senkrecht steht auf einer gedachten Linie von Bolzen 3 zu Bolzen 3 der Kette K.

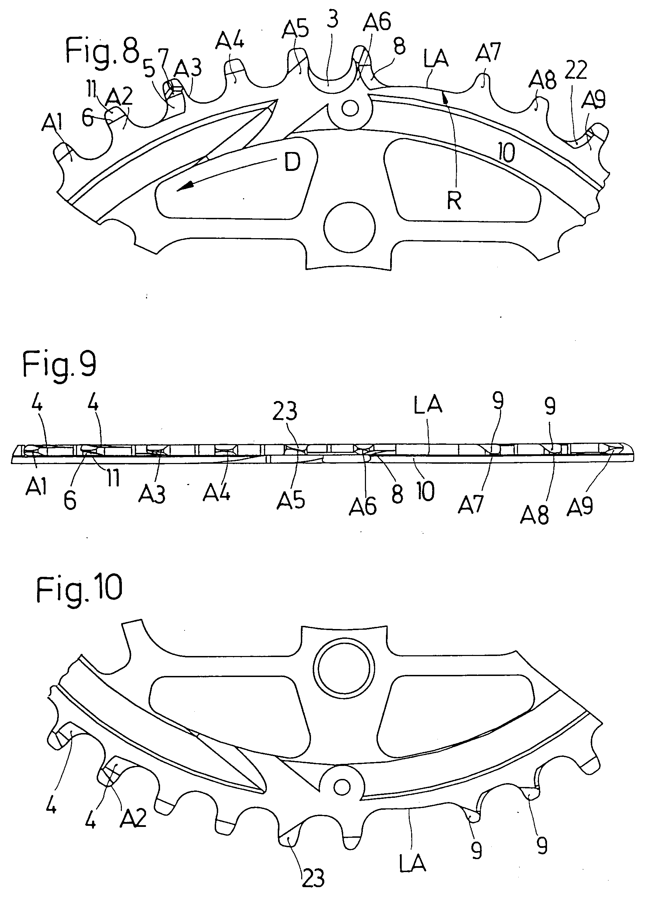

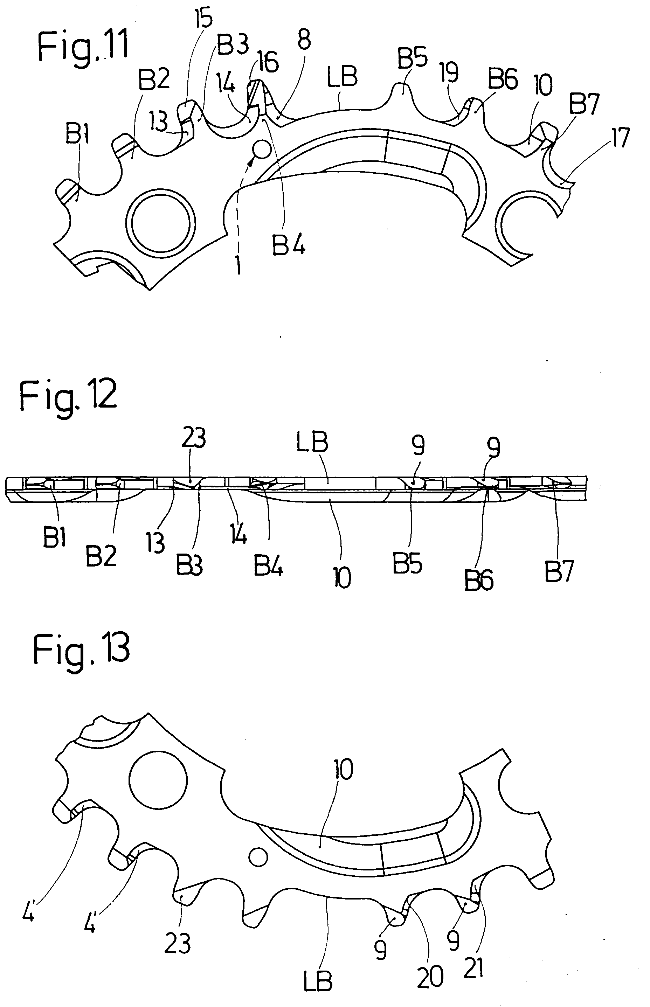

Gemäß den Fig. 9 und 12 wird für alle Zähne auf den Zahnkränzen A und B, die in ihrer Form von den restlichen 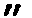 Normalzähnen" abweichen, fortlaufende Bezeichnungen eingeführt: A1... A9 beim großen Kettenrad A gemäß Fig. 9 und B1 ... B7 beim mittleren Kettenrad B gemäß Fig. 12. Normalzähne sind an ihren Spitzen auf beiden Seiten an ihren Planflächen angeschrägt und bilden so in Umlaufrichtung eine mehr oder weniger scharfe Kante, um die Kette in beiden Umlaufrichtungen insbesondere bei schrägem Ketteneinlauf in die Zahnreihe zu leiten und dort zu zentrieren.

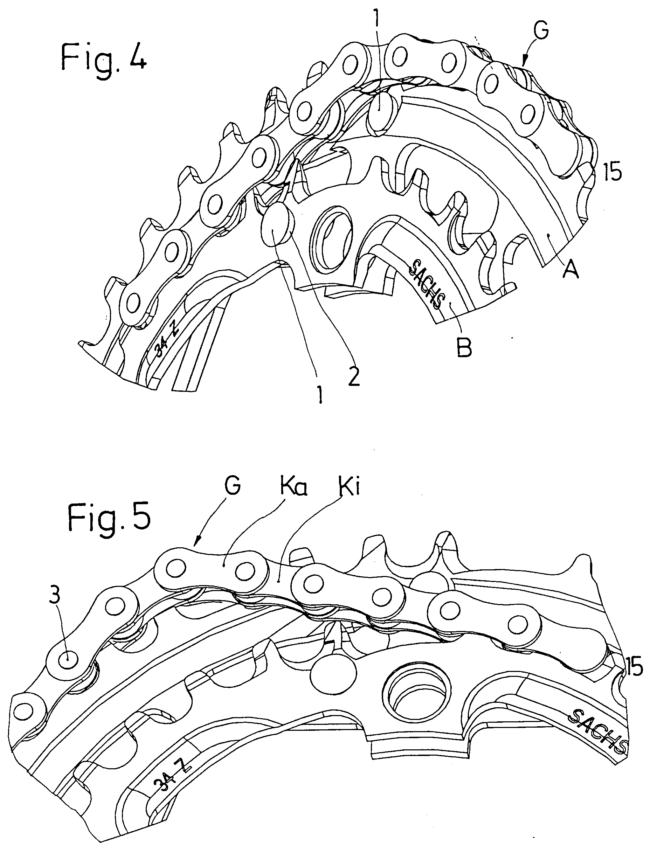

Am Beispiel gemäß Fig. 4 findet die Kette K ihren Weg vom kleineren Kettenrad B auf das größere Kettenrad A also über den Konusniet 1 durch eine Zahnlücke L,A über einen Fangzahn A7, der sich zwischen ein Außenlaschenpaar Ka oder ein Innenlaschenpaar Ki schiebt und die Kette K - auch unter Last - zuverlässig in die Zahnreihe einspurt. Der Fangzahn A7 weist eine Fangschräge 9 auf, die einseitig auf der dem mittleren Kettenrad B abgewandten Seite angeordnet und derart stark ausgebildet ist, daß die Zahnspitze in etwa mit der dem mittleren Kettenrad B zugewandten Planfläche des Kettenrades A zusammenfällt. Der in Umlaufrichtung D nachfolgende Zahn A8 ist ebenfalls als Fangzahn mit der Fangschräge 9 ausgebildet, um Schaltungen, die durch zuwenig Schaltdruck verursacht sind , nicht zu Fehlschaltungen werden zu lassen, insbesondere dann, wenn der Zahn 8 mit einer Innenlasche Ki in Berührung kommt. Die Zahnlücke LA weist einen Zahngrund mit etwa einem Radius R auf, der sich in Umlaufrichtung D spiralenförmig nach innen zieht, um den Außenlaschen Ka und/oder den Innenlaschen Ki die nötige Auflage zu geben. Der in Umlaufrichtung D vorlaufende Zahn A6 weist eine freiraumbildende Auflaufschräge 8 auf, die die Passage für die Kettenführung durch die Zahnlücke LA zusätzlich verbessert.

Um zu verhindern, daß die Kette K zwischen die Kettenräder gelangen kann und sich verklemmt, ist eine Wölbung 10 am großen Kettenrad A angeordnet. An der Stelle des Kettenübergangs, in Umlaufrichtung D gesehen vor der Passage durch die Zahnlücke LA radial innerhalb des Zahnes A5, ist diese Wölbung 10 unterbrochen, um im Schaltungsfalle Freiraum anzubieten. Die Wölbung 10' ist am mittleren Kettenrad B aus den vorbeschriebenen Gründen angeordnet, wobei diese im Kettenübergangsbereich ebenfalls unterbrochen ist, so daß das Umlegen der Kette K vom kleinen Kettenrad C auf das mittlere Kettenrad B erleichtert wird. Im übrigen sind hier die Bedingungen des Kettenübergangs ähnlich, wobei der Konusniet 1, eine Zahnlücke LB, ein Fangzahn B5, ein zweiter Fangzahn B6, die Fangschrägen 9, der Radius R sowie die Auflaufschräge 8 analog zu dem obenbeschriebenen Kettenübergang vom mittleren Kettenrad B auf das große Kettenrad A ihren Beitrag dazu leisten.

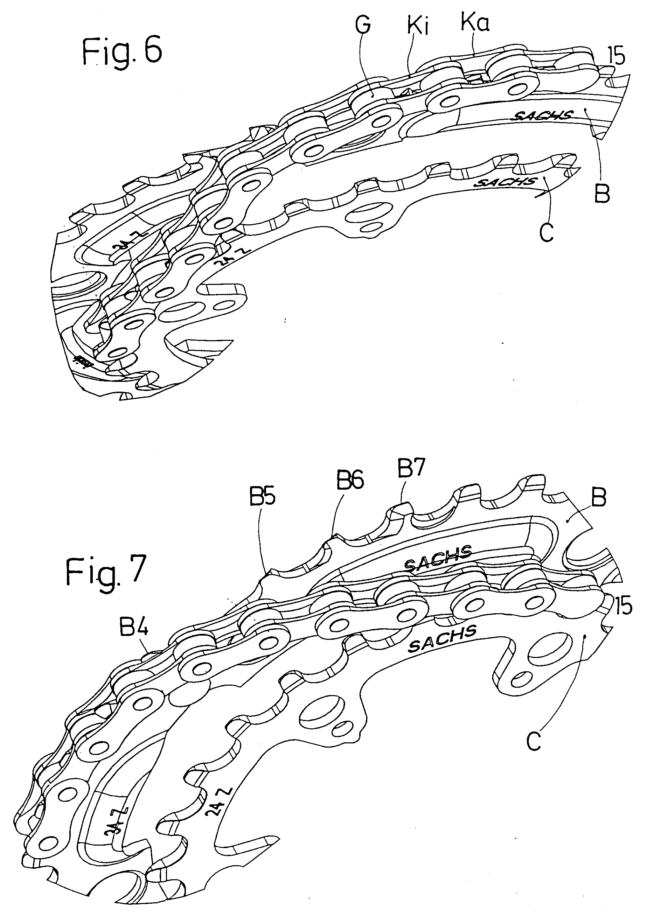

Die Figuren 3,5 und 7 zeigen einen bevorzugten Weg der Kette K, wenn sie vom großen Kettenrad A auf das mittlere Kettenrad B bzw. vom mittleren Kettenrad B auf das kleine Kettenrad C umgelegt werden soll. Die Wege sind so gewählt, daß die vormals beim Hochschalten festgelegte Stellung des Kettenrades A zum Kettenrad B bzw. des Kettenrades B zum Kettenrad C auch beim Herunterschalten einen Ketteneinlauf finden, wo die Zähne zwischen die Laschenpaare eintauchen und nicht mit dem Bolzen kollidieren. Ganz allgemein ist hier festzustellen, daß die Stelle des Kettenablaufes jeweils an die Durchmesserverhältnisse angepaßt werden muß. Die Stellen des Kettenablaufs sind hier für die Kettenräder A mit 44 Zähnen, B mit 34 Zähnen und C mit 24 Zähnen festgelegt. Wird an den Zähnezahlen an einer Stelle des Kettenradsatzes KS geändert, so müssen die Stellen des Kettenablaufes neu bestimmt werden, wenn die Stellen des Kettenübergangs vom kleineren auf das größere Kettenrad festliegen.

Im hier gezeigten konkreten Fall wird die Kette K, wenn sie vom Kettenrad A ablaufen soll, am Zahn A2 mit seinen Laschen erstmals außerhalb des Kettenrades A liegen, wenn dort ein Innenlaschenpaar Ki ankommt. Der Zahn A2 weist eine Schräge 11 auf, die der Innenlasche Ki den nötigen Freiraum verschafft, sich außerhalb der Verzahnung zu bewegen und ferner eine Stufe 6, auf welche sich die Innenlasche Ki auflegt, bevor sich der Rest der Kette auf das mittlere Kettenrad B herabsenkt. Trifft ein Außenlaschenpaar Ka auf den Zahn A2, so sorgen Ablaufschrägen 4 an den Zähnen A1 und A2 hier für eine Verschiebemöglichkeit der Kette K in Richtung mittleres Kettenrad B und eine ballige Fase 7 am Zahn A3 bewirkt, daß sich die dort ankommende Innenlasche Ki außerhalb des Zahnes A3 absenkt und der Kette K den Weg zum Ablaufen auf das mittlere Kettenrad B freigibt. Zur besseren Führung der Innenlasche Ki sorgt außerdem am Zahn A3 eine Senkung 5, wodurch sichergestellt ist, daß die Kette K nicht, wie eben beschrieben und in Fig. 2 sichtbar,aufreitet bevor sie auf das mittlere Kettenrad B abläuft.

Ein zweiter gangbarer aber nicht bevorzugter Weg für das Ablaufen der Kette K vom großen Kettenrad A ist der Zahn A9, welcher sich erstmals außerhalb eines Innenlaschenpaares Ki stellt mit Hilfe seiner Schräge 22. Eine solche Möglichkeit kommt vor, wenn der Einsatz der Schaltkraft in Verbindung mit geringem Kettenzug an der beschriebenen Stelle erfolgt. Einen Ablaufweg für die Kette K gibt es dann nicht, wenn dort eine Außenlasche Ka ankommt.

Beim Rückwärtstreten ist beim Schrägeinlaufen der Kette die Stelle der Zahnlücken LA und LB besonders von Fehlschaltungen bedroht, weshalb am Zahn A5 eine Abweisschräge 23 angeordnet ist.

Das Umlegen der Kette K vom mittleren Kettenrad B auf das kleinere Kettenrad C erfolgt im Prinzip in ähnlicher Weise wie das eben beschriebene Umlegen vom großen Kettenrad A auf das mittlere Kettenrad B. Die Kette K, wenn sie vom mittleren Zahnkranz B ablaufen soll, kann am Zahn B3 mit seinen Laschen erstmals außerhalb des Kettenrades B liegen, wenn dort ein Innenlaschenpaar Ki ankommt. Der Zahn B3 weist eine Schräge 15, die die Innenlasche Ki einweist, sowie eine Schräge 13 auf, die der Innenlasche Ki den nötigen Freiraum verschafft, sich außerhalb der Verzahnung zu bewegen. Ferner sind an den Zähnen B1 und B2 Schrägen 4' angebracht, die es der Innenlasche Ki am Zahn B1 und der Außenlasche Ka am Zahn B2 erlauben, sich bereits in Richtung Zahnmitte zu bewegen. Eine Senkung 14 gibt der nun folgenden Außenlasche Ka etwas Spielraum, um durch Eintauchen in die Planfläche des mittleren Kettenrades B den Durchgang zu erleichtern. Der so beschriebene Ablaufweg der Kette ist hier nur möglich, wenn am Zahn B1 eine Innenlasche Ki, am Zahn B2 ein Außenlasche Ka und außerhalb des Zahnes B3 eine Innenlasche Ki ankommen. Kommt beim Zahn B1 eine Außenlasche Ka, am Zahn B2 eine Innenlasche Ki, am Zahn B3 eine Außenlasche Ka an, so hat die Kette K frühestens vor Erreichen der Zahnlücke LB am Zahn B4 die Möglichkeit, eine Innenlasche Ki außerhalb der Zahnreihe zu plazieren. Hier unterstützen den Kettendurchgang eine Abweisschräge 23, die eigentlich die Innenlasche Ki beim Rückwärtsdrehen im Falle von Schräglauf der Kette K abweisen soll, sowie eine Schräge 16, die zwei verschiedene Winkel aufweist und die Innenlasche Ki nach außen befördert.

Ein zweiter gangbarer Weg für das Ablaufen der Kette K vom mittleren Kettenrad B ist der Zahn B6, der sich erstmals außerhalb eines Innenlaschenpaares Ki stellt mit Hilfe seiner Schräge 19 sowie mit Hilfe einer Schräge 20 am Zahn B5. Kommt am Zahn B6 eine Außenlasche Ka an, so ist es der Zahn 7, der mit Hilfe seiner Schräge 16 außerhalb der Innenlasche Ki zu liegen kommt. Unterstützt wird der Kettenablauf an dieser Stelle durch eine Ablaufschräge 21 am Zahn B6, welcher der Außenlasche Ka eine Annäherung in Richtung Planfläche des mittleren Kettenrades B erlaubt. Gleichzeitig wird die vorbeschriebene Ablaufschräge 20 gegenüber der dort einlaufenden Innenlasche Ki aktiv. Schließlich erleichtert eine Senkung 17 zwischen dem Zahn B7 und dem darauf folgenden Normalzahn den Kettenablauf durch Eintauchen der darauffolgenden Außenlasche Ka.

## Patentansprüche

1. Kettenschaltung, insbesondere für Fahrräder, umfassend einen treibenden Kettenradsatz (KS) und einen angetriebenen Kettenradsatz (KH) sowie eine diese beiden Kettenradsätze miteinander verbindende Kette (K) mit Gelenken (G), Bolzen (3), Außenlaschen (Ka) und Innenlaschen (Ki), wobei mindestens einer (KS) der Kettenradsätze mit drei Kettenrädern, nämlich einem großen (A) und einem mittleren Kettenrad (B) sowie mit einem kleinen Kettenrad (C), ausgebildet ist, wobei weiter die drei Kettenräder (A,B,C) des Kettenradsatzes (KS) je eine Vielzahl von Zähnen (A1...,B1...) aufweisen, wobei weiter die Kette (K) von aufeinander folgenden Kettengelenken (G) und von inneren (Ki) und äußeren Laschenpaaren (Ka) in abwechselnder Reihenfolge zwischen den Kettengelenken (G) gebildet ist, wobei weiter zum Umlegen der Kette (K) eine Umlegeeinrichtung (U) in einem Einlaufbereich (18) vorgesehen ist, in welchem die Kette (K) bei normaler Umlaufrichtung (D) der Kette (K) und der Kettenräder (A,B,C) in den Kettenradsatz (KS) einläuft und diese Umlegeeinrichtung (U) so ausgebildet ist, um der Kette (K) Bewegungen in einer zur Mittelachse des Kettenradsatzes (KS) parallelen Richtung zu erteilen und wobei die Kettenräder (A und B) jeweils Umfangsbereiche aufweisen, in denen das Umlegen der Kette (K) zwischen den Kettenrädern (C,B und A) erleichtert ist und in denen der Verlauf der entsprechenden Kettenübergangswege festgelegt ist, wobei beim Schalten der Kette (K) vom jeweils kleineren (C,B) auf das jeweils größere Kettenrad (B,A) im Umfangsbereich des jeweils größeren Kettenrades (B,A) ein Zahn zur Bildung einer Zahnlücke (LB,LA) ausgespart ist, welcher in der normalen Umlaufrichtung (D) eine Passage für die dem jeweils größeren Kettenrad (B,A) zugewandten Außenlaschen (Ka) und Innenlaschen (Ki) der Kette (K) bildet und wobei in Umfangsrichtung (D) der Zahnlücke (LB,LA) der nachfolgende Zahn (B5,A7) als Fangzahn mit einer Fangschräge (9) zum Eingriff sowohl zwischen die Außenlaschen (Ka) wie auch zwischen die Innenlaschen (Kb) ausgebildet ist, gekennzeichnet durch die beiden folgenden Merkmale:
an dem jeweils größeren Kettenrad (A oder B) ist an der Planflache zum jeweils kleineren Kettenrad (B oder C) hin ein Konusniet (1) mit einer umlaufenden scharfen Kante (2) nahe am der Zahnlücke (LA, LB) in Umfangsrichtung (D) vorlaufenden Zahn (A6, B4) angeordnet zur Abstützung der Kette (K) an einer Stelle um das Gelenk (G) in der Trennfuge zwischen der Außenlasche (Ka) und der Innenlasche (Ki) beim Schalten der Kette (K) auf das jeweils größere Kettenrad (B oder C) durch die von der Zahnlücke (LA bzw. LB) gebildete Passage;
die Zahnspitze des in Umfangsrichtung (D) der Zahnlücke (LA bzw. LB) nachfolgenden Fangzahnes (A7) ist in der Nähe der dem jeweils kleineren Kettenrad zugewandten Planfläche des Kettenrades (A oder B) verlagert, um das Eingreifen sowohl zwischen die Außenlaschen (Ka) wie auch zwischen die Innenlaschen (Ki) zu erleichtern.

2. Kettenschaltung nach Anspruch 1,
dadurch gekennzeichnet,
daß die jeweils größeren Kettenräder (A oder B) an mindestens einer Stelle in der Nachbarschaft der Zahnlücke (LA oder LB) Zähne (A1 und/oder A2 bzw. B1 und/oder B2) Überleitungshilfen aufweisen, die der Kette (K) das Verlassen des jeweiligen Kettenrades (A oder B) zur Überleitung auf das jeweils benachbarte kleinere Kettenrad erleichtern.

3. Kettenschaltung nach Anspruch 1,
dadurch gekennzeichnet,
daß der Verlauf des Grundes der Zahnlücke (LA oder LB) einer Krümmung folgt, deren angenäherter Radius (R) in der Umlaufrichtung (D) gesehen nach rückwärts und radial nach außen gerichtet dem Grund einen Verlauf einer Spirale verleiht und so die Passage für den Kettenanstieg zum Fangzahn (A7,B5) hin der Kette bei der Überleitung vom jeweils kleineren Kettenrad (C,B) auf das jeweils größere Kettenrad (B,A) anpaßt.

4. Kettenschaltung nach einem den Ansprüche 1 oder 3,
dadurch gekennzeichnet,
daß der der Passage in Umlaufrichtung (D) vorlaufende Zahn (A6,B4) zum Zwecke des verbesserten Eintauchens des Fangzahnes (A7,B5) zwischen insbesondere die Innenlaschen (Ki) der Kette (K) beim Durchtritt der Kette (K) durch die Zahnlücke (LA,LB) mit einer Anlaufschräge (8) versehen ist.

5. Kettenschaltung nach einem der Ansprüche 1 oder 4,
dadurch gekennzeichnet,
daß der der Zahnlücke (LA oder LB) in Umlaufrichtung (D) gesehen nachlaufende zweite Zahn (A8 oder B6) ebenfalls als Fangzahn mit einer Schräge (9) ausgebildet ist.

6. Kettenschaltung nach Anspruch 2,
dadurch gekennzeichnet,
daß es sich bei den Überleitungshilfen an den Zähnen an der Stelle in der Nachbarschaft der Zahnlücke (LA) beim großen Kettenrad (A) in Umlaufrichtung (D) gesehen verlaufend zu der Zahnlücke (LA) um Ablaufschrägen (4) an den Zähnen (A1 und A2), eine Stufe (6) am Zahn (A2) und eine Senkung (5) am Zahn (A3) handelt, wodurch zwei Ablaufmöglichkeiten für die Kette (K) auf das benachbarte kleinere Kettenrad (B) geschaffen sind.

7. Kettenschaltung nach Anspruch 1 oder 6,
dadurch gekennzeichnet,
daß es sich bei den Überleitungshilfen an den Zähnen an der Stelle in der Nachbarschaft der Zahnlücke (L,B,) beim mittleren Kettenrad (B) in Umlaufrichtung (D) gesehen vorlaufend zu der Zahnlücke (L,B) um Ablaufschrägen an den Zähnen (B1 und B2), eine Schräge (13) am Zahn (B3), eine Senkung (14) zwischen den Zähnen (B3 und B4) sowie um eine Schräge (15) am Zahn (B3) und eine Schräge (16) am Zahn (B4) zum Zwecke der Darstellung von zwei Kettenablaufwegen auf das benachbarte kleinere Kettenrad (C) handelt.

8. Kettenschaltung nach einem der Ansprüche 2, 6 oder 7,
dadurch gekennzeichnet,
daß es sich bei den Überleitungshilfen an den Zähnen an der Stelle in der Nachbarschaft der Zahnlücke (L,B) beim mittleren Kettenrad (B) in Umlaufrichtung (D) gesehen nachlaufend zur Zahnlücke (L,B) ferner um eine Senkung (17) zwischen den Zähnen (B7,B8), eine Ablaufschräge (20) am Zahn (B5) und um eine Ablaufschräge (21) am Zahn (B6) handelt, wodurch zwei weitere Möglichkeiten für den Ablauf der Kette (K) auf das benachbarte kleinere Kettenrad beschrieben ist.

9. Kettenschaltung nach Anspruch 1,
dadurch gekennzeichnet,
daß die Kettenräder (A und B) an jeweils zwei sich diametral gegenüberliegenden Umfangsstellen Kettenübergangsbereiche mit den Zahnlücken (L,A und L,B) sowie mit den modifizierten Zähne (A1-A9 bzw. B1-B7) aufweisen, wobei der Kettenübergang jeweils während der Erzeugung des geringsten Drehmomentes durch den Fahrradfahrer bei der Pedalstellung "oben" oder "unten" vonstatten geht.

10. Kettenschaltung nach Anspruch 1,
dadurch gekennzeichnet,
daß eine Abweisschräge (23) am Zahn (A5) angeordnet ist.

## Claims

1. Chain gearshift mechanism, in particular for bicycles, comprising a driving set of chain wheels (KS) and a driven set of chain wheels (KH), as well as a chain (K) which connects these two sets of chain wheels to one another and comprises links (G), pins (3), external link plates (Ka) and internal link plates (Ki), at least one (KS) of the sets of chain wheels being designed with three chain wheels, namely a large (A) and a middle chain wheel (B) and with a small chain wheel (C), and furthermore the three chain wheels (A, B, C) of the set of chain wheels (KS) each having a multiplicity of teeth (A1..., B1...), the chain (K) furthermore being formed by successive chain links (G) and by internal (Ki) and external link plate pairs (Ka) in an alternating sequence between the chain links (G), a shifting device (U) for shifting the chain (K) being provided in an entry area (18), in which the chain (K), when the chain (K) and the chain wheels (A, B, C) are turning in the normal direction (D), enters the set of chain wheels (KS), and this shifting device (U) being designed in such a way as to move the chain (K) in a direction which is parallel to the centre axis of the set of chain wheels (KS), and the chain wheels (A and B) each having circumferential areas in which it is relatively easy to shift the chain (K) between the chain wheels (C, B and A) and in which the path of the corresponding chain-transfer routes is fixed, and, in the circumferential area of the respectively larger chain wheel (B, A), a tooth being omitted so as to form a tooth space (LB, LA) for switching the chain (K) from the respectively smaller (C, B) to the respectively larger chain wheel (B, A), which tooth space, in the normal direction of rotation (D), forms a passage for those external link plates (Ka) and internal link plates (Ki) of the chain (K) which face towards the respectively larger chain wheel (B, A), and that tooth (B5, A7) which follows the tooth space (LB, LA) in the circumferential direction (D) being designed as a latching tooth with a latching bevel (9) for engaging both between the external link plates (Ka) and between the internal link plates (Kb), characterized by the following two features:
on the respectively larger chain wheel (A or B), a conical rivet (1) with a sharp circumferential edge (2) is arranged on the plane surface towards the respectively smaller chain wheel (B or C), close to the tooth (A6, B4) which precedes the tooth space (LA, LB) in the circumferential direction (D), in order to provide support for the chain (K) at a location around the link (G) in the gap between the external link plate (Ka) and the internal link plate (Ki) when the chain (K) is being switched onto the respectively larger chain wheel (B or C) through the passage formed by the tooth space (LA or LB);
the tooth point of the latching tooth (A7) which follows the tooth space (LA or LB) in the circumferential direction (D) is displaced in the vicinity of that plane surface of the chain wheel (A or B) which faces the respectively smaller chain wheel, in order to facilitate engagement both between the external link plates (Ka) and between the internal link plates (Ki).

2. Chain gearshift mechanism according to Claim 1, characterized in that the respectively larger chain wheels (A or B), at least at a location in the vicinity of the tooth space (LA or LB), have teeth (A1 and/or A2 or B1 and/or B2, respectively) with transfer aids which make it easier for the chain (K) to leave the respective chain wheel (A or B) in order to be transferred onto the respectively adjacent smaller chain wheel.

3. Chain gearshift mechanism according to Claim 1, characterized in that the profile of the base of the tooth space (LA or LB) follows a curve whose approximate radius (R), as seen in the direction of rotation (D), backwards and radially outwards, provides the base with a profile of a spiral, thus adapting the passage for the chain to rise towards the latching tooth (A7, B5) of the chain during the transfer from the respectively smaller chain wheel (C, B) onto the respectively larger chain wheel (B, A).

4. Chain gearshift mechanism according to one of Claims 1 or 3, characterized in that the tooth (A6, B4) which precedes the passage in the direction of rotation (D) is provided with a run-up slope (8) in order to facilitate insertion of the latching tooth (A7, B5) between in particular the internal link plates (Ki) of the chain (K) when the chain (K) passes through the tooth space (LA, LB).

5. Chain gearshift mechanism according to one of Claims 1 or 4, characterized in that the second tooth (A8 or B6) after the tooth space (LA or LB), as seen in the direction of rotation (D), is likewise designed as a latching tooth with a slope (9).

6. Chain gearshift mechanism according to Claim 2, characterized in that the transfer aids on the teeth, at the location in the vicinity of the tooth space (LA) on the large chain wheel (A), running towards the tooth space (LA) as seen in the direction of rotation (D), are run-down slopes (4) on the teeth (A1 and A2), a step (6) on the tooth (A2) and a lowered section (5) on the tooth (A3), thus providing two means for the chain (K) to run down onto the adjacent smaller chain wheel (B).

7. Chain gearshift mechanism according to Claim 1 or 6, characterized in that the transfer aids on the teeth, at the location in the vicinity of the tooth space (LB) on the middle chain wheel (B), in front of the tooth space (LB) as seen in the direction of rotation (D), are rundown slopes on the teeth (B1 and B2), a slope (13) on the tooth (B3), a lowered section (14) between the teeth (B3 and B4), and a slope (15) on the tooth (B3) and a slope (16) on the tooth (B4), in order to form two routes for the chain to run down onto the adjacent smaller chain wheel (C).

8. Chain gearshift mechanism according to one of Claims 2, 6 or 7, characterized in that the transfer aids on the teeth, at the location in the vicinity of the tooth gap (LB) on the middle chain wheel (B), following the tooth gap (LB) as seen in the direction of rotation (D), furthermore include a lowered section (17) between the teeth (B7, B8), a run-down slope (20) on the tooth (B5) and a run-down slope (21) on the tooth (B6), thus describing two further means for the chain (K) to run down onto the adjacent smaller chain wheel.

9. Chain gearshift mechanism according to Claim 1, characterized in that the chain wheels (A and B), at two diametrically opposite locations on the circumference, have chain-transfer areas comprising the tooth gaps (LA and LB) and the modified teeth (A1-A9 and B1-B7, respectively), the chain transfer each time taking place at the moment when the lowest torque is being produced by the cyclist at the "top" or "bottom" position of the pedals.

10. Chain gearshift mechanism according to Claim 1, characterized in that a guard slope (23) is arranged on the tooth (A5).

## Revendications

1. Changement de vitesse à chaîne, en particulier pour bicyclettes, comprenant un jeu de roues dentées menant (KS) et un jeu de roues dentées mené (KH) ainsi qu'une chaîne (K) reliant l'un à l'autre ces deux jeux de roues dentées, avec des articulations (G), des boulons (3), des mailles extérieures (Ka) et des mailles intérieures (Ki), au moins l'un (KS) des jeux de roues dentées étant formé avec trois roues dentées, à savoir une grande roue dentée (A) et une moyenne roue dentée (B) ainsi qu'une petite roue dentée (C), les trois roues dentées (A, B, C) du jeu de roues dentées (KS) présentant en outre respectivement une pluralité de dents (A1..., B1...), la chaîne (K) étant en outre formée d'articulations de chaîne successives (G) et de paires de mailles intérieures (Ki) et extérieures (Ka) se suivant en alternance entre les articulations de chaîne (G), un dispositif de changement (U) étant en outre prévu dans une zone d'entrée (18) pour déplacer la chaîne (K), dans lequel la chaîne (K) est introduite dans le jeu de roues dentées (KS) dans la direction de déplacement normale (D) de la chaîne (K) et des roues dentées (A, B, C), et ce dispositif de changement (U) étant conçu de manière à communiquer à la chaîne (K) des mouvements dans une direction parallèle à l'axe médian du jeu de roues dentées (KS) et les roues dentées (A et B) présentant chacune des zones circonférentielles dans lesquelles le déplacement de la chaîne (K) entre les roues dentées (C, B et A) est facilité, et dans lesquelles le profil des passages de transition correspondant de la chaîne est fixé, lors du changement de la chaîne (K) d'une roue dentée respectivement plus petite (C, B) à la roue dentée respectivement plus grande (B, A) dans la zone circonférentielle de la roue dentée respectivement plus grande (B, A), une dent étant enlevée pour former un entredent (LB, LA), qui forme, dans la direction normale de déplacement (D), un passage pour les mailles extérieures (Ka) et les mailles intérieures (Ki) de la chaîne (K) tournées vers la roue dentée respectivement plus grande (B, A), et, dans la direction de déplacement (D) de l'entredent (LB, LA), la dent suivante (B5, A7) étant conçue en tant que dent d'accrochage avec un biseau d'accrochage (9) pour venir en prise aussi bien entre les mailles extérieures (Ka) qu'entre les mailles intérieures (Ki), caractérisé par les deux caractéristiques suivantes:
sur la roue dentée respectivement plus grande (A ou B), est disposé un rivet conique (1) sur la face plane en direction de la roue dentée respectivement plus petite (B ou C), avec une arête (2) périphérique acérée à proximité de la dent (A6, B4) précédant l'entredent (LA, LB) dans la direction de déplacement (D), pour supporter la chaîne (K) en une position autour de l'articulation (G) dans le joint entre la maille extérieure (Ka) et la maille intérieure (Ki) lors du passage de la chaîne (K) à la roue dentée respectivement plus grande (A ou B) par le passage formé par l'entredent (LA, respectivement LB);
la pointe de dent de la dent d'accrochage (A7) suivant l'entredent (LA, respectivement LB) dans la direction de déplacement (D) est déplacée à proximité de la face plane de la roue dentée (A ou B) tournée vers la roue dentée respectivement plus petite, afin de faciliter l'accrochage aussi bien entre Tes mailles extérieures (Ka) qu'entre les mailles intérieures (Ki).

2. Changement de vitesse à chaîne selon la revendication 1, caractérisé en ce que les roues dentées respectivement plus grandes (A ou B) présentent en au moins un endroit à proximité de l'entredent (LA ou LB) des dents (A1 et/ou A2, respectivement B1 et/ou B2) servant d'auxiliaires de transfert, qui permettent à la chaîne (K) de quitter plus facilement la roue dentée respective (A ou B) pour passer à la roue dentée plus petite voisine respective.

3. Changement de vitesse à chaîne selon la revendication 1, caractérisé en ce que l'allure de la base de l'entredent (LA ou LB) suit une courbe dont le rayon (R) approximatif, vu dans la direction de déplacement (D) confère à la base, vers l'arrière et orienté radialement vers l'extérieur, une allure en spirale et ainsi adapte le passage pour faire monter la chaîne jusqu'à la dent d'accrochage (A7, B5) à la chaîne, lors du transfert de la roue dentée respectivement (C, B) à la plus petite roue dentée respectivement plus grande (B, A).

4. Changement de vitesse à chaîne selon l'une quelconque des revendications 1 ou 3, caractérisé en ce que la dent (A6, B4) précédant le passage dans la direction de déplacement (D), aux fins d'améliorer l'insertion de la dent d'accrochage (A7, B5) entre en particulier les mailles intérieures (Ki) de la chaîne (K) lors du passage de la chaîne (K) à travers l'entredent (LA, LB), est pourvue d'un biseau d'entrée (8).

5. Changement de vitesse à chaîne selon l'une quelconque des revendications 1 ou 4, caractérisé en ce que la deuxième dent (A8 ou B6) succédant à l'entredent (LA ou LB) dans la direction de déplacement (D) est également formée en tant que dent d'accrochage avec un biseau (9).

6. Changement de vitesse à chaîne selon la revendication 2, caractérisé en ce que les auxiliaires de transition sur les dents à l'endroit à proximité de l'entredent (LA) pour la grande roue dentée (A), avant l'entredent (LA) vu dans la direction de déplacement (D), sont des biseaux de sortie (4) sur les dents (A1 et A2), un cran (6) sur la dent (A2) et un creux (5) sur la dent (A3), deux possibilités de sortie pour la chaîne (K) étant ainsi créées sur la roue dentée plus petite voisine (B).

7. Changement de vitesse à chaîne selon la revendication 1 ou 6, caractérisé en ce que les auxiliaires de transition sur les dents à l'endroit à proximité de l'entredent (LB) pour la moyenne roue dentée (B) avant l'entredent (LB) vu dans la direction de déplacement (D), sont des biseaux de sortie sur les dents (B1 et B2), un biseau (13) sur la dent (B3), un creux (14) entre les dents (B3 et B4) ainsi qu'un biseau (15) sur la dent (B3) et un biseau (16) sur la dent (B4), afin de disposer de deux possibilités de sortie de chaîne sur la roue dentée plus petite voisine (C).

8. Changement de vitesse à chaîne selon l'une quelconque des revendications 2, 6 ou 7, caractérisé en ce que les auxiliaires de transition sur les dents à l'endroit à proximité de l'entredent (LB) pour la moyenne roue dentée (B) après l'entredent (LB) vu dans la direction de déplacement (D), sont en outre un creux (17) entre les dents (B7, B8), un biseau de sortie (20) sur la dent (B5) et un biseau de sortie (21) sur la dent (B6), deux autres possibilités de sortie de la chaîne (K) étant décrites sur la roue dentée voisine plus petite.

9. Changement de vitesse à chaîne selon la revendication 1, caractérisé en ce que les roues dentées (A et B) présentent, en deux positions diamétralement opposées sur la périphérie, des zones de transition de chaîne avec les entredents (LA et LB) ainsi qu'avec les dents modifiées (A1-A9, respectivement B1-B7), la transition de chaîne ayant lieu à chaque fois lors de la production du plus petit moment de rotation par le cycliste dans la position de pédale "haute" ou "basse"

10. Changement de vitesse à chaîne selon la revendication 1, caractérisé en ce qu'un biseau de chasse (23) est disposé sur la dent (A5).
